# EUROPÄISCHE PATENTSCHRIFT

(11) **EP 1 400 941 B1**
(45) Veröffentlichungstag und Bekanntmachung des Hinweises auf die Patenterteilung: **11.03.2009**
(21) Anmeldenummer: 03020348.3
(22) Anmeldetag: 09.09.2003
(51) Int. Cl.: G08B 25/08, G08B 5/22, G08B 25/01

(54) **Rufanlage auf Basis eines digitalen Telekommunikationsnetzes**
Calling device in a digital communication network
Installation d'appel sur un réseau numérique de communication

(30) Priorität: 12.09.2002 DE 10242534
(43) Veröffentlichungstag der Anmeldung: 24.03.2004
(73) Patentinhaber: SIEMENS AKTIENGESELLSCHAFT, 80333 München (DE)
(72) Erfinder: Brummer, Wolfgang, 90425 Nürnberg (DE); Kaufmann, Holger, 97228 Rottendorf (DE); Kuntz, Helmut, 90766 Fürth (DE)

(56) Entgegenhaltungen:
- DE-A- 19 735 668
- DE-A- 19 924 127
- US-A- 5 692 126
- US-A- 5 987 519

## Beschreibung

Die Erfindung bezieht sich auf eine Rufanlage, wie sie beispielsweise als Not- oder Pflegerufsystem in einem Pflegeheim, Altersheim oder Krankenhaus eingesetzt wird.

Für eine derartige sicherheitsrelevante Rufanlage gelten spezielle Sicherheitsanforderungen, die in der Norm DIN VDE 0834 festgelegt sind. Dort ist insbesondere die laufende Überwachung des gesamten Nachrichtenpfads gefordert. Weiterhin müssen Teile der Zimmerfunktionen der Rufanlage auch bei einem teilweisen Ausfall des Anlagennetzes für sich funktionstüchtig bleiben.

Zur Erfüllung dieser Forderungen basieren herkömmliche Rufanlagen häufig auf einem speziell konstruierten Netzwerk, das zusätzlich zu den ohnehin in einem Krankenhaus, etc. vorhandenen Telekommunikations- und Datennetzen realisiert werden muss. Um die Forderung nach laufender Überwachung der Rufanlage zu erfüllen, tauschen üblicherweise alle Knoten- oder Endpunkte des Anlagennetzes ständig Prüfdaten aus, bei deren Ausbleiben oder nicht-ordnungsgemäßer Verarbeitung ein Fehleralarm gegeben wird. Die Taktraten für die Ausgabe solcher Prüfdaten liegen häufig im Sekundenbereich.

Herkömmliche, im Pflegebereich eingesetzte Rufanlagen, wie sie beispielsweise aus der DE 197 52 742 A1 bekannt sind, sind aufgrund der aufwändigen Sicherheitstechnik bei vergleichsweise geringer Nachfrage sehr kostenintensiv. Im Hinblick auf die Kostenfrage ist insbesondere zu berücksichtigen, dass infolge der erforderlichen parallelen Einrüstung der Rufanlage mit weiteren Datennetzen der für Verkabelung und Datentransfergeräte anfallende Materialaufwand erheblich ist.

Zur Reduzierung dieses Materialaufwands ist aus der DE 199 24 127 A1 eine in ein Computernetzwerk integrierte Rufanlage bekannt. Aufgrund der verwendeten Netzwerktechnologie und der erforderlichen Peripheriegeräte ist die bekannte Rufanlage ebenfalls vergleichsweise kostenintensiv.

Der Erfindung liegt die Aufgabe zugrunde, eine preisgünstige Rufanlage anzugeben, die den insbesondere nach VDE 0834 gegebenen, erforderlichen Sicherheitsanforderungen entspricht.

Diese Aufgabe wird erfindungsgemäß gelöst durch die Merkmale des Patentanspruchs 1. Danach umfasst die Rufanlage eine digitale Vermittlungsanlage, die einerseits datentransfermäßig mit einem Endgerät, und andererseits mit einem Applikations-Server verbunden ist, wobei das Endgerät eine Rufauslöseeinheit zum Erzeugen eines Notrufes umfasst. Die Vermittlungsanlage ist weiterhin mit einer Überwachungseinheit verbunden, welche periodisch Prüfdaten an den Applikations-Server sendet und bei nicht ordnungsgemäßer Quittierung der Prüfdaten einen Fehlermelder aktiviert.

Die Erfindung geht von der Überlegung aus, dass eine Rufanlage besonders preisgünstig auf der Basis einer gewöhnlichen digitalen Telekommunikationsanlage (Tk-Anlage), z.B. nach IDSN- oder U_{P0/E} -Standard, zu realisieren ist. Eine solche Tk-Anlage, wie sie beispielsweise von der Fa. Siemens unter der Typenbezeichnung HiPATH hergestellt wird, umfasst üblicherweise mehrere mit einer Vermittlungsanlage sternförmig verbundene Endgeräte (z.B. Telefone, Faxgeräte, etc.) sowie einen oder mehrere Computer mit Applikations-Software. Dieser oder diese Applikations-Server übernehmen z.B. die Gebührenabrechnung. Tk-Technik ist zum einen vergleichsweise kostengünstig, da solche Anlagen nicht nur für den Pflegebereich, sondern auch im privaten und industriellen Bereich in großer Stückzahl eingesetzt werden. Zum anderen ist in den meisten Pflegeheimen, etc. eine Tk-Anlage ohnehin vorgesehen. Allerdings werden von herkömmlichen Tk-Anlagen die nach VDE 0834 gegebenen Sicherheitsanforderungen in Bezug auf die Überwachung der Kommunikationsstrecke zumeist nicht oder nicht vollständig erfüllt, so dass Tk-Anlagen bisher nicht ohne Weiteres für eine Rufanlage herangezogen werden können. Eine verbleibende Sicherheitslücke auch bei digitalen Tk-Anlagen besteht erkanntermaßen bei Verbindungen zwischen der Vermittlungsanlage und einem Applikations-Server. Durch die Überwachungseinheit wird zweckmäßigerweise dieser Teilbereich des Datenpfades überwacht.

Die Vermittlungsanlage selbst muss dadurch dem von der VDE 0834 geforderten Sicherheitsstandard nicht genügen und kann daher durch eine vergleichsweise preiswerte, herkömmliche Vermittlungsanlage realisiert sein. Neben der Funktionsfähigkeit der Leitung überwacht die Überwachungseinheit auch den Applikations-Server, zumal die Prüfdaten nur dann quittiert werden, wenn der Applikations-Server funktionsgemäß läuft.

In bevorzugter Ausführung umfasst die Rufauslöseeinheit eine Anschalteeinheit, die mit einem Rufauslöser verbunden ist. Unter Anschalteeinheit wird ein Gerät verstanden, das Daten konfliktfrei mit der digitalen Vermittlungsanlage austauschen kann und das Mittel zur Erzeugung und/oder Wiedergabe solcher Daten aufweist. Ein derartiges Anschaltegerät ist im Prinzip in einem digitalen Telefon vorhanden. Für eine VDE-gerechte Kommunikation ist diesem eine D-Kanal-Einspeisung für das Rufsignal hinzuzufügen. Der Rufauslöser ist beispielsweise eine Funktionstaste des Telefons, durch deren Betätigung ein Not- oder Pflegeruf ausgelöst wird. Äquivalentermaßen kann der Rufauslöser jedoch auch extern angeordnet und mit der Anschalteeinheit über eine aus dem Endgerät herausgeführte Rufleitung verbunden sein. Die Anschalteeinheit kann weiterhin Teil einer sogenannten "Zimmeranschaltung" sein, die die Ruffunktion beinhaltet, i.A. aber nicht zur Sprachaufnahme und/oder Wiedergabe ausgerüstet ist.

Vorzugsweise ist diese Rufleitung, und damit der Rufauslöser, durch einen Schleifenstrom überwacht. D.h., dass durch die Rufleitung ein kontinuierlicher Prüfstrom fließt, der anzeigt, dass die Leitung nicht unterbrochen ist.

Ein mit dem Endgerät verbundener Rufmelder dient zum einen dazu, den Notruf direkt anzuzeigen. Der Rufmelder ist dabei bevorzugt durch ein von Krankenhäusern hinlänglich bekanntes Zimmerlicht realisiert. Alternativ oder zusätzlich findet auch ein akustischer Rufmelder Verwendung. Weiterhin gewährleistet der direkt mit der Anschalteeinheit verbundene Rufmelder, dass der Notruf bei einem Ausfall der Vermittlungsanlage oder des Applikations-Servers zumindest lokal angezeigt wird.

Bevorzugt sind die Vermittlungsanlage und das Endgerät über eine digitale Telefonschnittstelle, z.B. U_{P0/E} oder einen S₀-Bus verbunden. Diese digitalen Telefonschnittstellen sind international genormt und dienen als Standardanschluss für digitale Endgeräte. Weiterhin beruht der Datentransfer zwischen der Vermittlungsanlage und dem Applikations-Server vorteilhafterweise auf dem TCP/IP-Standard. Dieses Protokoll ist für die Datenübertragung in Computernetzen hinlänglich bekannt. Herkömmliche Vermittlungsanlagen sind oft sogar standardmäßig mit TCP/IP-fähigen Schnittstellen ausgerüstet.

Eine vorteilhafte Realisierung der Überwachungseinheit durch eine zweite, mit der Vermittlungsanlage verbundene Anschalteeinheit erlaubt eine problemlose Anbindung der Überwachungseinheit an die Vermittlungsanlage. Ein eventueller Ausfall der Überwachungseinheit und der Verbindung wird dabei standardmäßig von der Vermittlungsanlage detektiert. In einer preiswerten und äußerst kompakten Ausführung ist die Überwachungseinheit durch einen Mikrokontroller, d.h. durch einen Halbleiter-Chip, realisiert. Insbesondere in dieser Form ist die Überwachungseinheit bevorzugt direkt in das Endgerät integriert. Dies erlaubt eine besonders einfache Umrüstung einer gewöhnlichen Tk-Anlage zu einer normgerechten Rufanlage, zumal an die Tk-Anlage lediglich ein erfindungsgemäßes Endgerät sowie ggf. ein Server angeschlossen werden muss.

Zweckmäßigerweise umfasst die Rufanlage mehrere solcher Endgeräte, von denen jedes eine Rufauslöseeinheit und eine Überwachungseinheit enthält.

Die mit der Erfindung verknüpften Vorteile bestehen insbesondere darin, dass durch Hinzufügung einer preisgünstigen Überwachungseinheit zu einer herkömmlichen digitalen Telekommunikationsanlage eine Rufanlage realisiert ist, die die hohen Sicherheitsanforderungen der VDE 0834 erfüllt. Dies ermöglicht eine extrem preisgünstige Realisierung der Rufanlage. Insbesondere können bereits vorhandene Tk-Anlagen problemlos aufgerüstet werden.

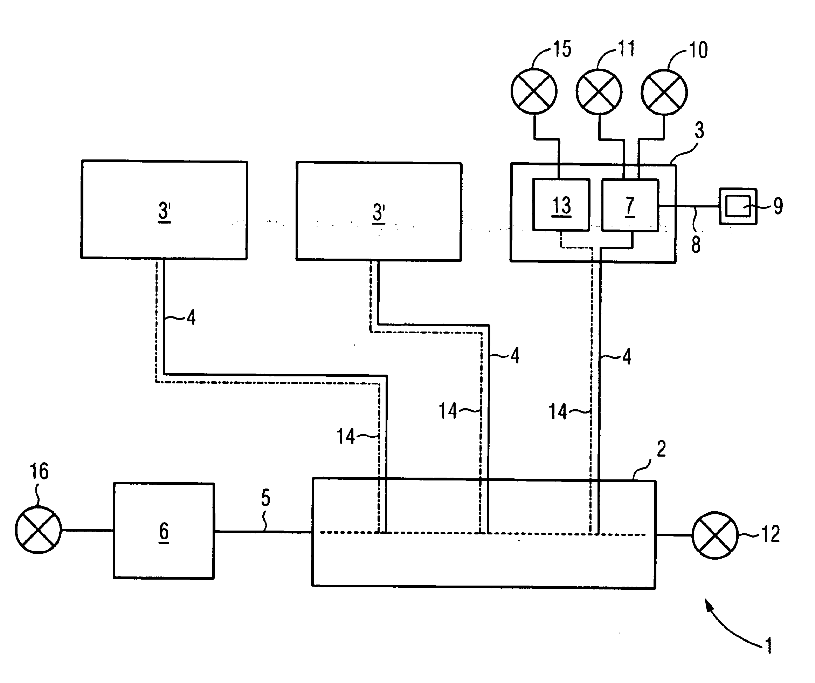

Nachfolgend wird ein Ausführungsbeispiel der Erfindung näher erläutert. Darin zeigt die einzige Figur ein Blockschaltbild einer Rufanlage auf Basis einer digitalen Telekommunikationsanlage.

Das Kernstück einer stark vereinfacht dargestellten Rufanlage 1 ist eine digitale Vermittlungsanlage 2. Die Vermittlungsanlage 2 ist sternförmig mit mehreren Endgeräten 3,3' verbunden, von denen nur das Endgerät 3 detaillierter ausgeführt ist. Die baugleichen Endgeräte 3' sind aus Gründen der Vereinfachung nur angedeutet. Die jedes Endgerät 3,3' mit der Vermittlungsanlage 2 verbindenden Datenleitungen 4 sind gemäß der bei einer digitalen Anlage gebräuchlichen Technik durch Sₒ oder U_{P0/E}-Schnittstellen ausgebildet. Die Vermittlungsanlage 2 steht weiterhin über eine LAN-Leitung 5 mit einem Applikations-Server 6 in Verbindung. Die LAN-Leitung 5 ist dabei in einer für ein gewöhnliches LAN (local area network) Computernetz gebräuchlichen Technik ausgeführt. Der Datentransfer zwischen der Vermittlungsanlage 2 und dem Applikations-Server 6 beruht dabei auf dem in Computernetzen weit verbreiteten TCP/IP-Standard.

Die Rufanlage 1 ist in ihrer Grundfunktion eine gewöhnliche digitale Telekommunikations(Tk)-Anlage, insbesondere Siemens Hi-PATH-Anlage mit U_{P0/E}-Schnittstellen. Das Endgerät 3 ist mit einer ersten Anschalteeinheit 7 versehen, die Daten mit der Vermittlungsanlage 2 austauschen kann, und die zur Dateneingabe und Datenausgabe auf nicht näher dargestellte Weise mit einem Lautsprecher, einem Mikrofon sowie einem Tastenfeld verbunden ist. Über das Endgerät 3 können somit normale Telefongespräche geführt werden. Alternativ ist als Endgerät 3 eine so genannte "Zimmeranschaltung" vorgesehen, bei der das Endgerät 3 nicht mit einer Sprechfunktion ausgerüstet ist.

Zur Auslösung eines Not- oder Pflegerufs ist die Anschalteeinheit 7 über eine Rufleitung 8 mit einem Rufauslöser verbunden, der durch eine Auslösetaste 9 gebildet ist. Die Anschalteeinheit 7, die Rufleitung 8 und die Auslösetaste 9 bilden somit eine Rufauslöseeinheit. Die Auslösetaste 9 kann eine der Funktionstasten des Endgerätes 3 sein oder - wie dargestellt - außerhalb des Endgerätes 3 angeordnet sein. Bei Betätigung der Auslösetaste 9 wird vom Endgerät 3 zunächst direkt, also nicht über die Vermittlungsanlage 2, ein Rufmelder 10 betätigt. Als Rufmelder 10 dient dabei zum einen ein in Krankenhäusern und Pflegeheimen gebräuchliches Zimmerlicht. Optional werden weitere Lichtmeldungen, z.B. in einem Stationszimmer, sowie ein akustisches Rufsignal aktiviert. Weiterhin sendet die Anschalteeinheit 7 ein Rufsignal über die Datenleitung 4 an die Vermittlungsanlage 2, von wo der Ruf über die LAN-Leitung 5 an den Applikations-Server 6 weitergegeben wird. Durch ein im Applikations-Server 6 installiertes Rufleitsystem werden nun weitere Schritte ausgelöst, wie z.B. die Übermittlung des Not- oder Pflegerufs als Rufweiterleitung an ein weiteres Endgerät 3'. Weiterhin können andere Meldesysteme wie DECT-Endgeräte, Personensuchgeräte, über Amtsleitungen erreichbare Geräte etc. aktiviert werden.

Um einen Fehler der Verbindung zur Auslösetaste 9 frühzeitig zu erkennen, ist die Rufleitung 8 schleifenstromüberwacht. D.h., dass unabhängig vom aktuellen Betriebszustand der Auslösetaste 9 ein kontinuierlicher Prüfstrom durch die Rufleitung 8 und die Auslösetaste 9 geleitet wird. Eine Schleifenstromüberwachung wird technisch beispielsweise dadurch realisiert, dass dem nicht näher dargestellten Schaltkontakt der Auslösetaste 9 ein hoher Widerstand parallel geschaltet ist, über den der Prüfstrom fließt. Eine Fehlfunktion innerhalb der Rufleitung 8 wird von der Anschalteeinheit 7 daran erkannt, dass der Prüfstrom unterbrochen ist. In diesem Fall aktiviert die Anschalteeinheit 7 einen Fehlermelder 11, der wie der Rufmelder 10, durch ein Licht- und/oder Tonsignal realisiert und auch im Rufmelder 10 integriert sein kann. Die Datenleitung 4 wird bei der Tk-Anlage standardgemäß sowohl seitens der Anschalteeinheit 7 als auch seitens der Vermittlungsanlage 2 ständig überwacht, indem periodisch Telegramme zwischen der Anschalteeinheit 7 und der Vermittlungsanlage 2 ausgetauscht werden. Bei nicht ordnungsgemäßer Quittierung der von der Anschalteeinheit 7 ausgesandten Telegramme aktiviert diese wiederum den Fehlermelder 11, so dass eine Unterbrechung der Datenleitung 4 oder ein Ausfall der Vermittlungsanlage 2 angezeigt wird. Ebenso aktiviert die Vermittlungsanlage 2 bei nicht ordnungsgemäßer Quittierung der von der Vermittlungsanlage 2 an die Anschalteeinheit 7 gesandten Telegramme einen mit der Vermittlungsanlage 2 verbundenen Fehlermelder 12 und meldet somit eine Unterbrechung der Datenleitung 4 oder den Ausfall der Anschalteeinheit 7.

Zur Überwachung der Verbindung zwischen der Vermittlungsanlage 2 und dem Applikations-Server 6 ist innerhalb des Endgerätes 3 eine zweite Anschalteeinheit 13 vorgesehen. Die Anschalteeinheit 13 ist über eine ebenfalls als digitale Telefonschnittstelle ausgeführte Prüfleitung 14 mit der Vermittlungsanlage 2 verbunden. Die Anschalteeinheit 13 ist wie die Anschalteeinheit 7 gemäß digitaler Tk-Technologie zum Datenaustausch mit der Vermittlungsanlage 2 vorgesehen. Die Anschalteeinheit 13, die in so genannter "embedded Technology" als Mikrochip ausgeführt ist, ist dabei derart konfiguriert, dass sie periodisch Prüfdaten über die Prüfleitung 14, die Vermittlungsanlage 2 und die LAN-Leitung 5 an den Applikations-Server 6 sendet und die Quittierung dieser Prüfdaten überwacht. Die Funktionen der Anschalteeinheiten 7 und 13 können auch als Software-Module auf einer einzigen Controller-Karte vorgesehen sein. Die Datenleitung 4 und die Prüfleitung 14 sind dabei i.A. nicht physikalisch getrennt. Die ordnungsgemäße Quittierung der von der Anschalteeinheit 13 ausgesandten Prüfdaten setzt voraus, dass die Prüfleitung 14, die Vermittlungsanlage 2, die LAN-Leitung 5 sowie der Applikations-Server 6 fehlerfrei funktionieren. Ist dies nicht der Fall, so aktiviert die Anschalteeinheit 13 einen weiteren Fehlermelder 15. Ein Ausfall der Anschalteeinheit 13 wiederum wird standardmäßig von der Vermittlungsanlage 2 erkannt. Funktionsstörungen innerhalb des Applikations-Servers 6 werden zudem vom Applikations-Server 6 über einen mit diesem verbundenen Fehlermelder 16 angezeigt.

Somit ist der gesamte Nachrichtenpfad ausgehend von der Auslösetaste 9 über die Anschalteeinheit 7, die Datenleitung 4, die Vermittlungsanlage 2, die LAN-Leitung 5 zum Applikations-Server 6 in redundanter Weise überwacht. Insbesondere sind die Sicherheitsanforderungen der VDE 0834 erfüllt. Im Fehlerfall wird ein Teil der Fehlermelder 11,12,15 und 16 in charakteristischer Weise aktiviert, so dass über dieses charakteristische Fehleranzeigemuster die Fehlerquelle schnell lokalisierbar ist.

## Patentansprüche

1. Rufanlage (1) mit einer digitalen Vermittlungsanlage (2), einem Endgerät (3,3'), einem Applikations-Server (6), einer Überwachungseinheit (13) und einem Fehlermelder (15), wobei die Vermittlungsanlage (2) einerseits mit dem eine Rufauslöseeinheit (7,8,9) umfassenden Endgerät (3,3'), und andererseits mit dem Applikations-Server (6) datentransfermäßig verbunden ist, wobei die Vermittlungsanlage (2) weiterhin mit der Überwachungseinheit (13) verbunden ist, welche Mittels zur periodischen Sendung von Prüfdaten an den Applikations-Server (6) und Mittels zur Aktivierung des Fehlermelders (15) bei nicht ordnungsgemäßer Quittierung der Prüfdaten aufweist.

2. Rufanlage nach Anspruch 1, **dadurch gekennzeichnet, dass** die Rufauslöseeinheit eine mit einem Rufauslöser (9) verbundene erste Anschalteeinheit (7) umfasst.

3. Rufanlage nach Anspruch 2, **dadurch gekennzeichnet, dass** die Anschalteeinheit (7) und der Rufauslöser (9) über eine schleifenstromüberwachte Rufleitung (8) verbunden sind.

4. Rufanlage nach einem der Ansprüche 1 bis 3, **dadurch gekennzeichnet, dass** das Endgerät (3,3') mit einem Rufmelder (10) verbunden ist, der durch Betätigung der Rufauslöseeinheit (9) aktivierbar ist.

5. Rufanlage nach einem der Ansprüche 1 bis 4, **dadurch gekennzeichnet, dass** die Vermittlungsanlage (2) und das Endgerät (3,3') über eine digitale Telefonschnittstelle verbunden sind.

6. Rufanlage nach einem der Ansprüche 1 bis 5, **dadurch gekennzeichnet, dass** der Datentransfer zwischen der Vermittlungsanlage (2) und dem Applikations-Server (6) auf dem TCP/IP-Standard beruht.

7. Rufanlage nach einem der Ansprüche 1 bis 6, **dadurch gekennzeichnet, dass** die Überwachungseinheit durch eine zweite, mit der Vermittlungsanlage (2) verbundene Anschalteeinheit (13) gebildet ist.

8. Rufanlage nach einem der Ansprüche 1 bis 7, **dadurch gekennzeichnet, dass** die Überwachungseinheit (13) als Mikrocontroller in Form eines Halbleiterbauteils ausgebildet ist.

9. Rufanlage nach einem der Ansprüche 1 bis 8, **dadurch gekennzeichnet, dass** die Überwachungseinheit (13) im Endgerät (3,3') integriert ist.

10. Rufanlage nach Anspruch 9, **gekennzeichnet durch** mehrere mit der Vermittlungsanlage (2) verbundene Endgeräte (3,3').

11. Rufanlage nach einem der Ansprüche 1 bis 10, **dadurch gekennzeichnet, dass** die Vermittlungsanlage (2) eine digitale Telekommunikationsanlage ist.

## Claims

1. Call system (1) comprising a digital private branch exchange (2), a terminal device (3,3'), an application server (6), a monitoring unit (13) and a fault alerting device (15), wherein the private branch exchange (2) is connected for data transfer purposes on the one hand to the terminal device (3,3') comprising a call initiating unit (7,8,9) and on the other hand to the application server (6), wherein the private branch exchange (2) is also connected to the monitoring unit (13) which has means for periodically sending test data to the application server (6) and means for activating the fault alerting device (15) if the test data are not acknowledged correctly.

2. Call system according to claim 1, **characterized in that** the call initiating unit comprises a first connector unit (7) connected to a call initiator (9).

3. Call system according to claim 2, **characterized in that** the connector unit (7) and the call initiator (9) are connected via a call line (8) that is monitored by means of a loop current.

4. Call system according to one of claims 1 to 3,
**characterized in that** the terminal device (3, 3') is connected to a call alerting device (10) which can be activated by actuation of the call initiating unit (9).

5. Call system according to one of claims 1 to 4,
**characterized in that** the private branch exchange (2) and the terminal device (3,3') are connected via a digital telephone interface.

6. Call system according to one of claims 1 to 5,
**characterized in that** the data transfer between the private branch exchange (2) and the application server (6) is based on the TCP/IP standard.

7. Call system according to one of claims 1 to 6,
**characterized in that** the monitoring unit is formed by means of a second connector unit (13) that is connected to the private branch exchange (2).

8. Call system according to one of claims 1 to 7,
**characterized in that** the monitoring unit (13) is embodied as a microcontroller in the form of a semiconductor component.

9. Call system according to one of claims 1 to 8,
**characterized in that** the monitoring unit (13) is integrated in the terminal device (3,3').

10. Call system according to claim 9, **characterized by** a plurality of terminal devices (3,3') that are connected to the private branch exchange (2).

11. Call system according to one of claims 1 to 10,
**characterized in that** the private branch exchange (2) is a digital telecommunications system.

## Revendications

1. Installation ( 1 ) d'appel comprenant une installation ( 2 ) numérique de commutation, un terminal ( 3, 3' ), un serveur ( 6 ) d'application, une unité ( 13 ) de contrôle et un indicateur ( 15 ) d'erreur, dans laquelle l'installation ( 2 ) de commutation est reliée de manière à transférer des données d'une part au terminal ( 3, 3' ) comprenant une unité ( 7, 8, 9 ) de déclenchement d'appel et d'autre part au serveur ( 6 ) d'application, dans laquelle l'installation ( 2 ) de commutation est reliée en outre à l'unité ( 13 ) de contrôle qui a des moyens d'envoi périodique de données de contrôle au serveur ( 6 ) d'application et des moyens d'activation de l'indicateur ( 15 ) d'erreur si la quittance des données de contrôle n'est pas correcte.

2. Installation d'appel suivant la revendication 1, **caractérisée en ce que** l'unité de déclenchement d'appel comprend une première unité ( 7 ) de connexion, reliée à un déclencheur ( 9 ) d'appel.

3. Installation d'appel suivant la revendication 2, **caractérisée en ce que** l'unité ( 7 ) de connexion et le déclencheur ( 9 ) d'appel sont reliés par une ligne ( 8 ) d'appel, contrôlée par un courant en boucle.

4. Installation d'appel suivant l'une des revendications 1 à 3, **caractérisée en ce que** le terminal ( 3, 3' ) est relié à un indicateur ( 10 ) d'appel, qui peut être activé par actionnement de l'unité ( 9 ) de déclenchement d'appel .

5. Installation d'appel suivant l'une des revendications 1 à 4, **caractérisée en ce que** l'installation (2) de commutation et le terminal ( 3, 3' ) sont reliés par une interface téléphonique numérique.

6. Installation d'appel suivant l'une des revendications 1 à 5, **caractérisée en ce que** le transfert de données entre l'installation ( 2 ) de commutation et le serveur ( 6 ) d'application reposent sur la norme TCP/IP.

7. Installation d'appel suivant l'une des revendications 1 à 6, **caractérisée en ce que** l'unité de contrôle est formée par une deuxième unité ( 13 ) de connexion, reliée à l'installation ( 2 ) de commutation.

8. Installation d'appel suivant l'une des revendications 1 à 7, **caractérisée en ce que** l'unité ( 13 ) de contrôle est sous la forme d'un micro régisseur sous la forme d'un composant à semi-conducteurs.

9. Installation d'appel suivant l'une des revendications 1 à 8, **caractérisée en ce que** l'unité ( 13 ) de contrôle est intégrée dans le terminal ( 3, 3' ).

10. Installation d'appel suivant la revendication 9, **caractérisée par** plusieurs terminaux ( 3, 3' ) reliés à l'installation ( 2 ) de commutation.

11. Installation d'appel suivant l'une des revendications 1 à 10, **caractérisée en ce que** l'installation ( 2 ) de commutation est une installation de télécommunication numérique.
